# EUROPÄISCHE PATENTSCHRIFT

(11) **EP 1 957 336 B1**
(45) Veröffentlichungstag und Bekanntmachung des Hinweises auf die Patenterteilung: **01.06.2016**
(21) Anmeldenummer: 06818120.5
(22) Anmeldetag: 05.12.2006
(51) Int. Cl.: B61F 15/20

(54) **SENSORBESTÜCKTE RADSATZLAGEREINHEIT FÜR SCHIENENFAHRZEUGE**
RAIL VEHICLE WHEEL SET BEARING UNIT EQUIPPED WITH SENSORS
UNITE BOITE D'ESSIEU MUNIE DE CAPTEURS POUR VEHICULES FERROVIAIRES

(30) Priorität: 07.12.2005 DE 102005058410
(43) Veröffentlichungstag der Anmeldung: 20.08.2008
(73) Patentinhaber: Schaeffler Technologies AG & Co. KG, 91074 Herzogenaurach (DE)
(72) Erfinder: STITZINGER, Rupert, 91522 Ansbach (DE); REQUEJO, Ana, Aberdeen AB1 16TF (GB)
(86) Internationale Anmeldenummer: PCT/DE2006/002152
(87) Internationale Veröffentlichungsnummer: WO 2007/065413

(56) Entgegenhaltungen:
- EP-A1- 0 323 789
- EP-A1- 0 976 638
- WO-A-00/51869
- DE-A1- 4 138 867
- DE-A1- 19 522 543

## Beschreibung

### Gebiet der Erfindung

Die Erfindung betrifft eine sensorbestückte Radsatzlagereinheit für Schienenfahrzeuge, welche im Wesentlichen durch ein Achslager für eine umlaufende Achse, einem das Achslager umschließenden Achslagergehäuse sowie durch eine Sensoreinheit zur Zustandsüberwachung des Achslagers gebildet wird.

### Hintergrund der Erfindung

Dem Fachmann für Radsatzlagerungen an Schienenfahrzeugen ist es allgemein bekannt, dass eine mechanische Beschädigung der Achslager am Drehgestell die Sicherheit des Schienenfahrzeuges erheblich beeinträchtigt und ein Versagen der Achslager letztendlich zu katastrophalen Folgen führen kann. Die Ursachen mechanischer Beschädigungen an Achslagern sind dabei sehr vielfältig, sie können jedoch in den meisten Fällen auf Herstellungs- oder Montagedefekte an den Achslagern, Materialermüdungsrisse oder Absplitterrungen an deren Laufflächen, übermäßige Korrosion einzelner Lagerteile aufgrund beschädigter Dichtungen, übermäßige Erwärmung der Achslager aufgrund ungenügender Schmierung der beweglichen Lagerteile oder auf Vibrationsermüdungen einzelner Lagerteile aufgrund von Flachstellen auf der Rollfläche der Fahrzeugräder zurückgeführt werden. Da die Verfahren zur Überprüfung des Zustands der Achslager in der Vergangenheit auf in regelmäßigen Abständen stattfindende Wartungseingriffe beschränkt waren, bei denen alle Achslager eines Schienenfahrzeuges ungeachtet ihres Zustandes ausgewechselt wurden, und diese Vorgehensweise sich in erster Linie als sehr kostenaufwändig erwiesen hat, ist es vor allem bei modernen Schienenfahrzeugen führe hohe Geschwindigkeiten seit längerem üblich, den Zustand jedes Achslagers durch entsprechende Sensoren laufend zu überwachen, um somit rechtzeitig eine Vorhersage oder Detektion des Auftretens von Störungen am Achslager zu ermöglichen und zu gegebener Zeit geeignete Maßnahmen ergreifen zu können. Bei solchen sensorbestückten Radsatzlagereinheiten, die im Wesentlichen aus einem Achslager für eine umlaufende Achse, einem das Achslager umschließenden feststehenden Achslagergehäuse sowie aus einer Sensoreinheit bestehen, werden die Achslager mit verschiedenen Geberelementen ausgerüstet und an geeigneten Messpunkten mit entsprechenden Sensoren bestückt, die über Datenübertragungskabel mit einer elektronischen Prozessoreinheit im Schienenfahrzeug zur Anzeige fehlerhafter Zustände verbunden sind.

Eine solche sensorbestückte Radsatzlagereinheit ist beispielsweise aus der SKF-Firmenzeitschrift "Evolution", 1995, Heft 4, Seiten 24 bis 27 und aus der DE 41 38 867 C2 des gleichen Unternehmens vorbekannt. Bei dieser Radsatzlagereinheit besteht das Achslager in bekannter Weise aus einem auf der umlaufenden Achse befestigten mitdrehenden Teil und einem im feststehenden Achslagergehäuse befestigten stationären Teil sowie dazwischen abrollenden Wälzkörpern, wobei der Zwischenraum zwischen dem mitdrehenden und dem stationären Teil axial nach außen durch eine Dichtungseinheit abgedichtet wird, die aus einem am stationären Teil des Achslagers befestigten Dichtungsring und einem am mitdrehenden Teil des Achslagers befestigten Dichtungsring besteht. An der Außenseite des am stationären Teil des Achslagers befestigten Dichtungsrings ist dann ein mit mehreren Geberelementen am Achslager in Kontakt stehender Sensormodul befestigt, der zusammen mit einem Datenübertragungskabel und einem Verbindungsstück zu einer elektronischen Prozessoreinheit im Wesentlichen die Sensoreinheit der Radsatzlagerung bildet. Das Datenübertragungskabel besteht dabei aus einem vom Sensormodul zu einem Steckerflansch im Achslagergehäuse führenden fest installierten Kabelteil und einem an beiden Enden mit Steckverbindern ausgebildeten losen Kabelteil, mit welchem die Verbindung zwischen dem Steckerflansch im Achslagergehäuse und dem Anschluss zur elektronischen Prozessoreinheit im Schienenfahrzeug hergestellt wird und welches bei Wartungsarbeiten an der Radsatzlagereinheit durch Lösen der Steckkontakte entfernt wird.

Nachteilig bei dieser sensorbestückten Radsatzlagereinheit ist es jedoch, dass die Steckverbinder der Sensoreinheit keine dauerhaft sichere elektrische Verbindung zwischen dem Steckerflansch im Achslagergehäuse und dem Anschluss zur elektronischen Prozessoreinheit im Schienenfahrzeug gewährleisten, da Steckverbindungen im Allgemeinen sehr staub- und wasserempfindlich sind und somit unter den rauen Fahrbedingungen eines Schienenfahrzeuges eine relativ hohe Ausfallwahrscheinlichkeit aufweisen. Trotz vorhandener Verbindungssicherungen und Dichtungen an den Steckverbindungen der bekannten Sensoreinheit hat es sich in der Praxis gezeigt, dass es vor allem durch die im Fahrbetrieb des Schienenfahrzeuges auftretenden Vibrationen und Temperaturschwankungen an der Radsatzlagereinheit zum Eindringen von Feuchtigkeit und Staub oder sogar zum selbsttätigen Lockern oder Lösen der Steckverbindungen der Sensoreinheit am Achslagergehäuse und/oder am Anschluss zur elektronischen Prozessoreinheit kommen kann, so dass es zu Störungen bei der Datenübertragung zur Prozessoreinheit kommt und eine rechtzeitige Vorhersage oder Detektion des Auftretens von Störungen am Achslager nicht mehr möglich ist. Außerdem ist es durch die feste Installation Steckerflansches im Achslagergehäuse und des zum Sensormodul führenden Kabelteils des Datenübertragungskabels sehr aufwändig, diesen Teil der Sensoreinheit beim Ausbau des Achslagers zu Wartungszwecken zu entfernen, so das sich die durch das einfache Lösen der Steckverbindungen des losen Kabelteils der Sensoreinheit erzielten Einsparungen an Zeit und Kosten für die Wartungsarbeiten wieder relativieren. Ebenso hat sich die relativ dünnwandige Ummantelung des Datenübertragungskabels am losen Kabelteil der Sensoreinheit als ungenügender Schutz gegen mechanische Beschädigungen des Datenübertragungskabels, wie Steinschlag oder dergleichen, erwiesen.

EP 0 976 638 A1 offenbart eine gattungsgemäße Radsatzlagereinheit.

### Aufgabe der Erfindung

Ausgehend von den dargelegten Nachteilen des bekannten Standes der Technik liegt der Erfindung deshalb die Aufgabe zu Grunde, eine sensorbestückte Radsatzlagereinheit für Schienenfahrzeuge zu konzipieren, deren Sensoreinheit auch unter rauen Fahrbedingungen eine dauerhaft sichere elektrische Verbindung zwischen dem Sensormodul im Achslagergehäuse und dem Anschluss zur elektronischen Prozessoreinheit im Schienenfahrzeug sowie einen sicheren Schutz gegen mechanische Beschädigungen gewährleistet und welche bei Wartungsarbeiten am Achslager einfach und schnell von diesem entkoppelbar ist.

### Beschreibung der Erfindung

Erfindungsgemäß wird diese Aufgabe bei einer sensorbestückten Radsatzlagereinheit für Schienenfahrzeuge nach dem Oberbegriff des Anspruchs 1 derart gelöst, dass die Sensoreinheit als steckverbindungsfreie einteilige Montageeinheit ausgebildet ist, deren Sensormodul bei der Montage durch das Achslagergehäuse hindurch in dieses einführbar ist und welche durch ein zwischen dem Sensormodul und dem Verbindungsstück am Achslagergehäuse angeordnetes Flanschteil dauerhaft kontaktsicher an der Radsatzlagereinheit fixierbar ist.

Bevorzugte Ausgestaltungen und vorteilhafte Weiterbildungen der erfindungsgemäß ausgebildeten sensorbestückten Radsatzlagereinheit werden in den Unteransprüchen beschrieben.

Danach ist es gemäß den Ansprüchen 2 und 3 bei der erfindungsgemäß ausgebildeten Radsatzlagereinheit vorgesehen, dass der Sensormodul der Sensoreinheit durch eine Radialbohrung im Achslagergehäuse hindurch in dieses einführbar ist und ein Druckgussgehäuse aufweist, dessen größte Höhe und Tiefe geringfügig kleiner als der Durchmesser der Radialbohrung im Achslagergehäuse ist. Da eine solche Radialbohrung im Achslagergehäuse bei vielen Schienenfahrzeugen bereits vorhanden ist und zum Einstecken externer Drehzahlgeber genutzt wird, ist die erfindungsgemäße Lösung somit auch mit Radsatzlagerung bereits im Betrieb befindlicher Schienenfahrzeuge kompatibel und kann ohne weitere Aufwendungen an diesen nachgerüstet werden. Der Sensormodul ist dabei in seiner Formgebung an die Radialbohrung angepasst, indem dessen bevorzugt aus einem Druckgussmetall bestehendes Gehäuse eine längliche, an den Radius seiner Befestigungsstelle am stationären Dichtungsring der Dichtungseinheit angepasste Grundform sowie eine größte Höhe und Tiefe aufweist, die ein problemloses Durchführen des Sensormoduls durch die Radialbohrung hindurch ermöglicht. Der derart ausgebildete Sensormodul wird dann nach dem Einführen in das Achslagergehäuse mit zwei an seinem Druckgussgehäuse angeformten Befestigungsflanschen an der Außenseite des stationären Dichtungsrings der Dichtungseinheit verschraubt und weist innerhalb seines Druckgussgehäuses zumindest einen Sensor aus der Gruppe der Bewegungs-, Drehrichtungs-, Temperatur-, Schwingungs-, Winkelpositions- oder Drehgeschwindigkeitssensoren auf, die mit entsprechenden Geberelementen am Achslager in Wirkkontakt stehen.

Gemäß Anspruch 4 zeichnet sich die erfindungsgemäß ausgebildete Radsatzlagereinheit darüber hinaus noch dadurch aus, dass das Flanschteil der Sensoreinheit durch einen Hohlzylinder gebildet wird, durch den hindurch das Datenübertragungskabel geführt ist und an dessen Außenseite zwei sich gegenüberliegende Radialstege mit Schraubenbohrungen angeformt sind, über die das Flanschteil an der Außenseite des Achslagergehäuses verschraubbar ist. Als besonders kostengünstig hat es sich dabei erwiesen, das Flanschteil ebenfalls als Metalldruckgussteil herzustellen, da somit gleichzeitig sowohl die Durchgangsbohrung zur Kabeldurchführung durch das Flanschteil als auch die Schraubenbohrungen in den Radialstegen zur Befestigung des Flanschteils am Achslagergehäuse einformbar sind und nur noch geringfügige Nacharbeiten notwendig sind. Ebenso ist es vorteilhaft, die Radialstege am Flanschteil mit ebenen Anlageflächen auszubilden, die an einer am Aschlagergehäuse entsprechend angeformten ebenen Gegenfläche anliegen, da somit die Kosten für entsprechende Druckgussformen geringer sind. Möglich ist es jedoch auch, die Radialstege am Flanschteil an den Radius des ohne eine gesonderte Gegenfläche aufweisenden Achslagergehäuses angepasst gekrümmt auszubilden.

Eine zweckmäßige Weiterbildung der erfindungsgemäß ausgebildeten Radsatzlagereinheit ist es nach den Ansprüchen 5 und 6 desweiteren, dass der dem Achslagergehäuse zugewandte Hohlzylinderabschnitt des Flanschteils als Zentrierzapfen ausgebildet ist, der einen annähernd dem Durchmesser der Radialbohrung im Achslagergehäuse entsprechenden Außendurchmesser und eine geringfügig aus der Radialbohrung in das Achslagergehäuse ragende Länge aufweist. Mit diesem Zentrierzapfen wird das Flanschteil bei der Montage in die Radialbohrung im Achslagergehäuse derart eingesteckt, dass die Schraubenbohrungen in den Radialstegen des Flanschteils zu den zur Befestigung des Flanschteils vorgesehenen Gewindebohrungen im Achslagergehäuse lagefixiert werden. Zusätzlich ist in die Mantelfläche des Zentrierzapfens des Flanschteils zumindest eine umlaufende Ringnut eingearbeitet, in die zur Vermeidung des Eindringens von Verschmutzungen und Feuchtigkeit in das Achslagergehäuse über die Radialbohrung ein O-Dichtring eingesetzt ist. Dabei kann eine weitere Verbesserung der Abdichtwirkung dadurch erreicht werden, dass in die Mantelfläche des Zentrierzapfens zwei oder mehr nacheinander angeordnete Ringnuten eingearbeitet und in diese zwei oder mehr Dichtringe eingesetzt werden.

Schließlich wird es als vorteilhafte Ausgestaltung der erfindungsgemäß ausgebildeten Radsatzlagereinheit durch Anspruch 7 noch vorgeschlagen, dass das Datenübertragungskabel am Eingang und am Ausgang des Hohlzylinders des Flanschteils durch Elastomerringe gegen Durchscheuern sowie durch einen zwischen dem Flanschteil und dem Verbindungsstück zur elektronischen Prozessoreinheit angeordneten flexiblen Kunststoffschlauch gegen mechanische Beschädigungen geschützt ist. Die Elastomerringe sind dabei vorteilhafterweise Bestandteil bekannter Überwurfmuttern, die bei der Vormontage der Sensoreinheit auf das Datenübertragungskabel aufgezogen werden und an den mit entsprechenden Gewinden ausgebildeten Enden des Hohlzylinders des Flanschteils verschraubt werden. Die außerhalb des Achslagergehäuses angeordnete Überwurfmutter weist dabei ebenso wie das Verbindungsstück zur elektronischen Prozessoreinheit rückseitig noch ein weiteres Gewinde auf, an denen dann der ebenfalls mit bekannten Überwurfmuttern fixierbare flexible Kunststoffschlauch zur Vermeidung mechanischer Beschädigungen verschraubt wird.

Die erfindungsgemäß ausgebildete sensorbestückte Radsatzlagereinheit weist somit gegenüber den aus dem Stand der Technik bekannten sensorbestückten Radsatzlagereinheiten den Vorteil auf, dass deren Sensoreinheit einteilig vorgefertigte Montageeinheit aus dem Sensormodul, dem Datenübertragungskabel, einem externen Flanschteil, einem externen Schutzschlauch und dem Verbindungsstück zur Prozessoreinheit ausgebildet ist, die Steckverbindungen an der schwingungstechnisch hoch belasteten Radsatzlagerung unnötig macht und somit auch unter rauen Fahrbedingungen eine dauerhaft sichere elektrische Verbindung zwischen dem Sensormodul im Achslagergehäuse und dem Anschluss zur elektronischen Prozessoreinheit im Schienenfahrzeug gewährleistet. Durch die einteilige Ausführung der Sensoreinheit ist diese auch bei Wartungsarbeiten am Achslager einfach und schnell von diesem entkoppelbar und gleichzeitig wird durch den externen Schutzschlauch und durch gezielt angeordnete Dichtelemente ein sicherer Schutz gegen mechanische Beschädigungen sowie gegen das Eindringen von Verschmutzungen und Feuchtigkeit geboten.

### Kurze Beschreibung der Zeichnungen

Eine bevorzugte Ausführungsform der erfindungsgemäß ausgebildeten sensorbestückten Radsatzlagereinheit wird nachfolgend unter Bezugnahme auf die beigefügten Zeichnungen näher erläutert. Dabei zeigen:
- Figur 1: eine dreidimensionale Gesamtansicht einer erfindungsgemäß ausgebildeten sensorbestückten Radsatzlagereinheit eines Schienenfahrzeuges;
- Figur 2: einen vergrößerten Ausschnitt aus der dreidimensionalen Gesamtansicht der erfindungsgemäß ausgebildeten sensorbestückten Radsatzlagereinheit gemäß Figur 1;
- Figur 3: eine vergrößerte dreidimensionale Darstellung der Sensoreinheit und des Achslagers der erfindungsgemäß ausgebildeten sensorbestückten Radsatzlagereinheit.

### Ausführliche Beschreibung der Zeichnungen

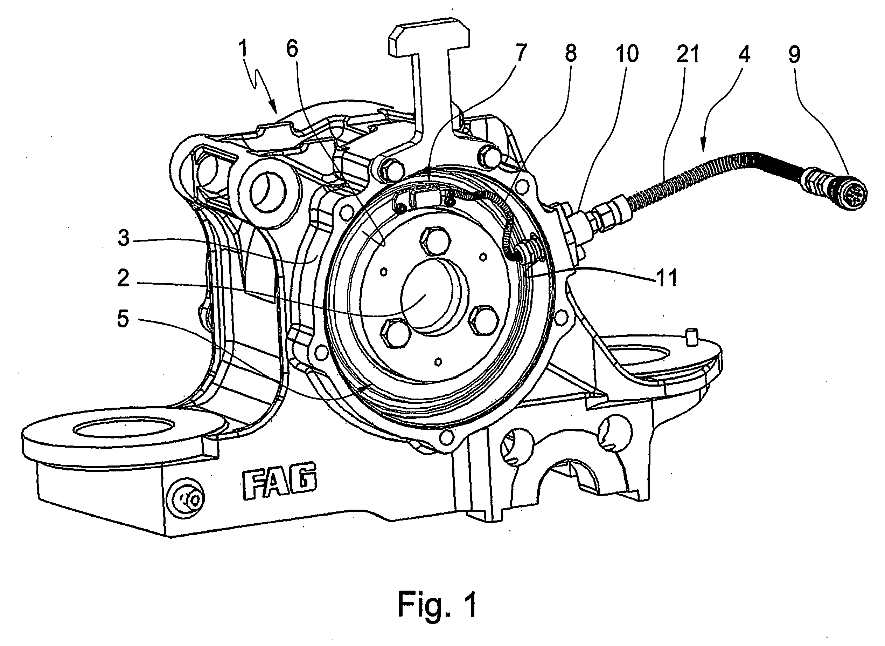

Aus Figur 1 geht deutlich eine sensorbestückte Radsatzlagereinheit 1 für Schienenfahrzeuge hervor, welche im Wesentlichen durch ein in der Zeichnung nicht sichtbares Achslager für eine umlaufende Achse 2, einem das Achslager umschließenden feststehenden Achslagergehäuse 3 sowie durch eine Sensoreinheit 4 zur Zustandsüberwachung des Achslagers gebildet wird, die sich im Wesentlichen aus einem Sensormodul 7, einem Datenübertragungskabel 8 und einem Verbindungsstück 9 zu einer elektronischen Prozessoreinheit zusammensetzt. Das Achslager besteht dabei aus einem auf der umlaufenden Achse 2 befestigten, nicht näher dargestellten mitdrehenden Teil und einem im feststehenden Achslagergehäuse 3 befestigten, ebenso nicht dargestellten stationären Teil, zwischen denen eine Anzahl nicht dargestellter Wälzkörper abrollen. Der Zwischenraum zwischen dem mitdrehenden und dem stationären Teil dieses Achslager wird axial nach außen durch zumindest eine Dichtungseinheit 5 mit einem am stationären Teil des Achslagers befestigten Dichtungsring 6 abgedichtet, an dessen Außenseite der mit mehreren Geberelementen am Achslager in Kontakt stehende Sensormodul 7 der Sensoreinheit 4 befestigt ist.

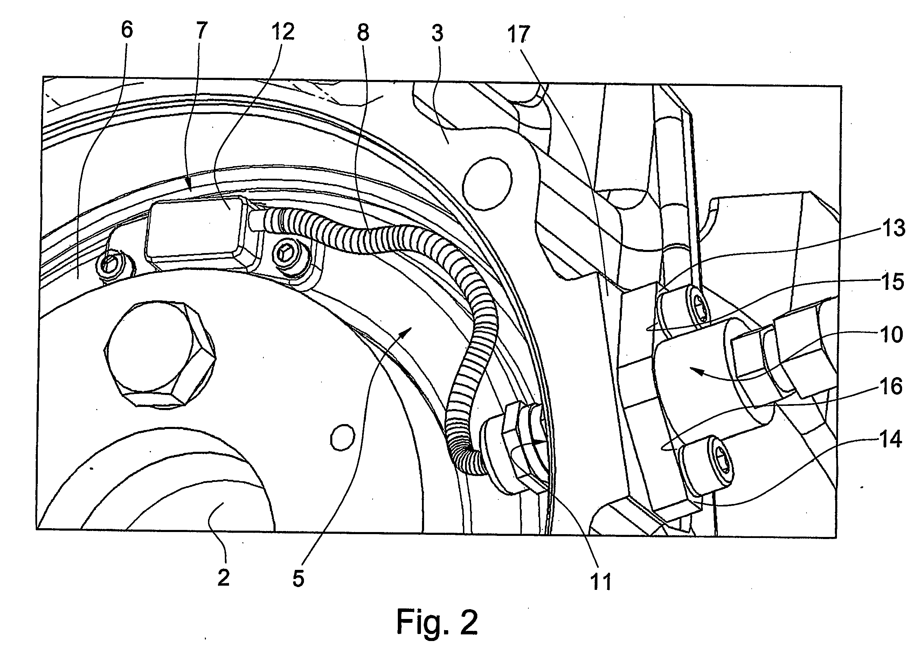

Desweiteren ist aus Figur 1 ersichtlich, dass die Sensoreinheit 4 erfindungsgemäß als steckverbindungsfreie einteilige Montageeinheit ausgebildet ist, deren Sensormodul 7 bei der Montage durch das Achslagergehäuse 3 hindurch in dieses einführbar ist und welche durch ein zwischen dem Sensormodul 7 und dem Verbindungsstück 9 am Achslagergehäuse 3 angeordnetes Flanschteil 10 dauerhaft kontaktsicher an der Radsatzlagereinheit 1 fixierbar ist. Die vergrößerte Darstellung der Radsatzlagereinheit 1 gemäß Figur 2 zeigt dabei, dass der Sensormodul 7 der Sensoreinheit 4 durch eine Radialbohrung 11 im Achslagergehäuse 3 hindurch in dieses einführbar ist und ein Druckgussgehäuse 12 aufweist, dessen größte Höhe und Tiefe geringfügig kleiner als der Durchmesser der Radialbohrung 11 im Achslagergehäuse 3 ist und somit ein problemloses Durchführen des Sensormoduls 7 durch die Radialbohrung 11 hindurch ermöglicht. Der derart ausgebildete Sensormodul 7 wird dann nach dem Einführen in das Achslagergehäuse 3 mit zwei an seinem Druckgussgehäuse 12 angeformten Befestigungsflanschen an der Außenseite des stationären Dichtungsrings 6 der Dichtungseinheit 5 verschraubt und weist innerhalb seines Druckgussgehäuses 12 zumindest einen Sensor aus der Gruppe der Bewegungs-, Drehrichtungs-, Temperatur-, Schwingungs-, Winkelpositions- oder Drehgeschwindigkeitssensoren auf.

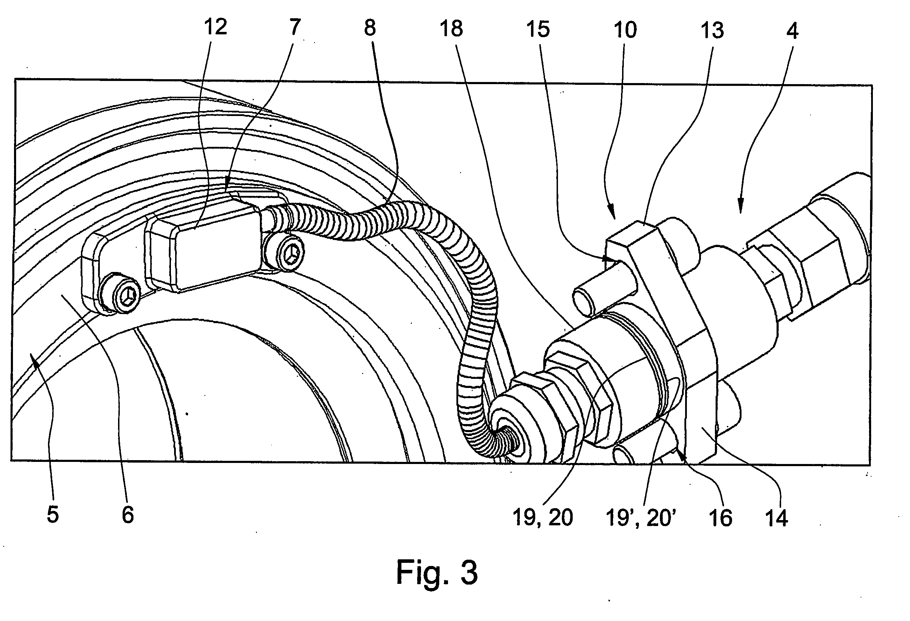

Aus den Figuren 2 und 3 ist darüber hinaus noch ersichtlich, dass das Flanschteil 10 der Sensoreinheit 4 durch einen Hohlzylinder gebildet wird, durch den hindurch das Datenübertragungskabel 8 geführt ist und an den zwei sich gegenüberliegende Radialstege 13, 14 mit Schraubenbohrungen 15, 16 angeformt sind, über die das Flanschteil 10 an der Außenseite 17 des Achslagergehäuses 3 verschraubt ist. Der dem Sensormodul 7 zugewandte Hohlzylinderabschnitt des Flanschteils 10 ist dabei deutlich sichtbar als Zentrierzapfen 18 ausgebildet, der in die Radialbohrung 11 im Achslagergehäuse 3 einsetzbar ist und mit dem die Schraubenbohrungen 15, 16 in den Radialstegen 13, 14 des Flanschteils 10 zu ihren Gewindebohrungen im Achslagergehäuse 3 lagefixiert werden. Dieser Zentrierzapfen 18 weist klar ersichtlich einen annähernd dem Durchmesser der Radialbohrung 11 im Achslagergehäuse 3 entsprechenden Außendurchmesser auf und ist an diesem mit zwei in Figur 3 sichtbaren umlaufenden Ringnuten 19, 19' ausgebildet, in die zwei das Achslagergehäuse 3 gegen Verschmutzungen und Feuchtigkeit abdichtende O-Dichtringe 20, 20' eingesetzt werden.

Lediglich andeutungsweise geht aus den Figuren 1 bis 3 schließlich noch hervor, dass das Datenübertragungskabel 8 am Eingang und am Ausgang des Hohlzylinders des Flanschteils 10 durch Elastomerringe gegen Durchscheuern sowie durch einen zwischen dem Flanschteil 10 und dem Verbindungsstück 9 zur elektronischen Prozessoreinheit angeordneten, in Figur 1 abgebildeten flexiblen Kunststoffschlauch 21 gegen mechanische Beschädigungen geschützt ist. Die Elastomerringe sind dabei Bestandteil der in den Figuren nicht näher bezeichneten bekannten Überwurfmuttern am Flanschteil 10 der Sensoreinheit 4, die bei der Vormontage der Sensoreinheit 4 auf das Datenübertragungskabel 8 aufgezogen werden und an den mit entsprechenden Gewinden ausgebildeten Enden des Hohlzylinders des Flanschteils 10 verschraubt werden.

### Bezugszahlenliste

- 1: Radsatzlagereinheit
- 2: Achse
- 3: Achslagergehäuse
- 4: Sensoreinheit
- 5: Dichtungseinheit
- 6: Dichtungsring
- 7: Sensormodul
- 8: Datenübertragungskabel
- 9: Verbindungsstück
- 10: Flanschteil
- 11: Radialbohrung in 3
- 12: Druckgussgehäuse von 7
- 13: Radialsteg an 10
- 14: Radialsteg an 10
- 15: Schraubenbohrung in 13
- 16: Schraubenbohrung in 14
- 17: Außenseite von 3
- 18: Zentrierzapfen von 10
- 19: Ringnut in 16
- 19': Ringnut in 16
- 20: O-Dichtring
- 20': O-Dichtring
- 21: Kunststoffschlauch

## Patentansprüche

1. Sensorbestückte Radsatzlagereinheit für Schienenfahrzeuge, welche im Wesentlichen durch ein Achslager für eine umlaufende Achse (2), einem das Achslager umschließenden feststehenden Achslagergehäuse (3) sowie durch eine Sensoreinheit (4) zur Zustandsüberwachung des Achslagers gebildet wird, wobei das Achslager zumindest aus einem auf der umlaufenden Achse (2) befestigten mitdrehenden Teil und einem im feststehenden Achslagergehäuse (3) befestigten stationären Teil besteht und axial nach außen durch zumindest eine Dichtungseinheit (5) mit einem am stationären Teil des Achslagers befestigten Dichtungsring (6) abgedichtet wird, an dessen Außenseite ein mit mehreren Geberelementen am Achslager in Kontakt stehender Sensormodul (7) befestigt ist, der zusammen mit einem Datenübertragungskabel (8) und einem Verbindungsstück (9) zu einer elektronischen Prozessoreinheit im Wesentlichen die Sensoreinheit (4) bildet, **dadurch gekennzeichnet, dass** die Sensoreinheit (4) als steckverbindungsfreie einteilige Montageeinheit ausgebildet ist, deren Sensormodul (7) bei der Montage durch das Achslagergehäuse (3) hindurch in dieses einführbar ist und welche durch ein zwischen dem Sensormodul (7) und dem Verbindungsstück (9) am Achslagergehäuse (3) angeordnetes Flanschteil (10) dauerhaft kontaktsicher an der Radsatzlagereinheit (1) fixierbar ist.

2. Sensorbestückte Radsatzlagereinheit nach Anspruch 1, **dadurch gekennzeichnet, dass** der Sensormodul (7) der Sensoreinheit (4) durch eine Radialbohrung (11) im Achslagergehäuse (3) hindurch in dieses einführbar ist und ein Druckgussgehäuse (12) aufweist, dessen größte Höhe und Tiefe geringfügig kleiner als der Durchmesser der Radialbohrung (11) im Achslagergehäuse (3) ist.

3. Sensorbestückte Radsatzlagereinheit nach Anspruch 2, **dadurch gekennzeichnet, dass** der Sensormodul (7) mit seinem Druckgussgehäuse (12) an der Außenseite des stationären Dichtungsrings (6) der Dichtungseinheit (5) verschraubt ist und zumindest einen Sensor aus der Gruppe der Bewegungs-, Drehrichtungs-, Temperatur-, Schwingungs-, Winkelpositions- oder Drehgeschwindigkeitssensoren aufweist.

4. Sensorbestückte Radsatzlagereinheit nach Anspruch 1, **dadurch gekennzeichnet, dass** das Flanschteil (10) der Sensoreinheit (4) durch einen Hohlzylinder gebildet wird, durch den hindurch das Datenübertragungskabel (8) geführt ist und an den zwei sich gegenüberliegende Radialstege (13, 14) mit Schraubenbohrungen (15, 16) angeformt sind, über die das Flanschteil (10) an der Außenseite (17) des Achslagergehäuses (3) verschraubbar ist.

5. Sensorbestückte Radsatzlagereinheit nach Anspruch 2 und 4, **dadurch gekennzeichnet, dass** der dem Sensormodul (7) zugewandte Hohlzylinderabschnitt des Flanschteils (10) als Zentrierzapfen (18) ausgebildet ist, der in die Radialbohrung (11) im Achslagergehäuse (3) einsetzbar ist und mit dem die Schraubenbohrungen (15, 16) in den Radialstegen (13, 14) des Flanschteils (10) zu ihren Gewindebohrungen im Achslagergehäuse (3) lagefixierbar sind.

6. Sensorbestückte Radsatzlagereinheit nach Anspruch 5, **dadurch gekennzeichnet, dass** der Zentrierzapfen (18) einen annähernd dem Durchmesser der Radialbohrung (11) im Achslagergehäuse (3) entsprechenden Außendurchmesser aufweist und an diesem mit zumindest einer umlaufenden Ringnut (19) ausgebildet ist, in die ein das Achslagergehäuse (3) gegen Verschmutzungen und Feuchtigkeit abdichtender O-Dichtring (20) eingesetzt ist.

7. Sensorbestückte Radsatzlagereinheit nach Anspruch 1, **dadurch gekennzeichnet, dass** das Datenübertragungskabel (8) am Eingang und am Ausgang des Hohlzylinders des Flanschteils (10) durch Elastomerringe gegen Durchscheuern sowie durch einen zwischen dem Flanschteil (10) und dem Verbindungsstück (9) zur elektronischen Prozessoreinheit angeordneten flexiblen Kunststoffschlauch (21) gegen mechanische Beschädigungen geschützt ist.

## Claims

1. Rail vehicle wheel set bearing unit equipped with sensors, which wheel set bearing unit is formed essentially by an axle bearing for a rotating axle (2), a fixed axle bearing housing (2) which encloses the axle bearing, and by a sensor unit (4) for monitoring the state of the axle bearing, wherein the axle bearing is composed of at least one part which is mounted on the rotating axle (2) and rotates along with it, and a stationary part which is mounted in the fixed axle bearing housing (3), and said axle bearing is sealed axially with respect to the outside by means of at least one sealing unit (5) with a sealing ring (6) which is mounted on the stationary part of the axle bearing and on the outside of which a sensor module (7), which is in contact with a plurality of encoder elements on the axle bearing, is mounted, which sensor module (7) essentially forms the sensor unit (4), together with a data transmission cable (8) and a connecting piece (9) which connects to an electronic processor unit, **characterized in that** the sensor unit (4) is embodied as a single-piece mounting unit which is free of a plug-type connection and whose sensor module (7) can be inserted through and into said axle bearing housing (3) during mounting and which can be attached in a durably contact-securing fashion to the wheel set bearing unit (1) by means of a flange part (10) which is arranged on the axle bearing housing (3), between the sensor module (7) and the connecting piece (9).

2. Wheel set bearing unit equipped with sensors, according to Claim 1, **characterized in that** the sensor module (7) of the sensor unit (4) can be introduced into the axle bearing housing (3) through a radial bore (11) in said axle bearing housing (3), and has a pressure die-cast housing (12), the maximum height and depth of which are slightly smaller than the diameter of the radial bore (11) in the axle bearing housing (3).

3. Wheel set bearing unit equipped with sensors, according to Claim 2, **characterized in that** the sensor module (7) is screwed with its pressure die-cast housing (12) to the outside of the stationary sealing ring (6) of the sealing unit (5) and has at least one sensor from the group of movement sensors, rotational direction sensors, temperature sensors, vibration sensors, angular position sensors or rotational speed sensors.

4. Wheel set bearing unit equipped with sensors, according to Claim 1, **characterized in that** the flange part (10) of the sensor unit (4) is formed by a hollow cylinder through which the data transmission cable (8) is guided and onto which two radial webs (13, 14) which are located opposite one another, have screw holes (15, 16) and by means of which the flange part (10) can be screwed onto the outside (17) of the axle bearing housing (3) are integrally formed on.

5. Wheel set bearing unit equipped with sensors, according to Claims 2 and 4, **characterized in that** the hollow cylinder section, facing the sensor module (7), of the flange part (10) is embodied as a centring pin (18) which can be inserted into the radial bore (11) in the axle bearing housing (3) and with which the screw holes (15, 16) can be positionally fixed in the radial webs (13, 14) of the flange part (10) with respect to their threaded holes in the axle bearing housing (3).

6. Wheel set bearing unit equipped with sensors, according to Claim 5, **characterized in that** the centring pin (18) has an external diameter which corresponds approximately to the diameter of the radial bore (11) in the axle bearing housing (3) and is formed thereon with at least one circumferential annular groove (19), into which an O sealing ring (20), which seals the axle bearing housing (3) against contamination and moisture, is inserted.

7. Wheel set bearing unit equipped with sensors, according to Claim 1, **characterized in that** the data transmission cable (8) at the entry and at the exit of the hollow cylinder of the flange part (10) is protected against fraying by elastomer rings, and against mechanical damage by a flexible plastic hose (21) which is arranged between the flange part (10) and the connecting piece (9) which connects to the electronic processor unit.

## Revendications

1. Unité de boîte d'essieu munie de capteurs pour véhicules ferroviaires, qui est formée essentiellement par un palier d'essieu destiné à un essieu rotatif (2), un logement de boîte d'essieu (3) entourant le palier d'essieu et par une unité de détection (4) destinée à surveiller l'état du palier d'essieu, dans lequel le palier d'essieu est constitué d'au moins une partie fixée sur l'essieu rotatif (2) et tournant avec celui-ci et d'une partie stationnaire fixée dans le logement de boîte d'essieu (3) fixe et rendu étanche axialement vers l'extérieur par au moins une unité d'étanchéité (5) comprenant une bague d'étanchéité (6), fixée sur la partie stationnaire du palier d'essieu, sur la face extérieure de laquelle est fixé un module de détection (7), en contact avec plusieurs éléments émetteurs situés su le palier d'essieu, qui forme essentiellement l'unité de détection (4) conjointement avec un câble de transmission de données (8) et une pièce de connexion (9) reliée à une unité de traitement électronique, **caractérisée en ce que** l'unité de détection (4) est réalisée sous la forme d'une unité de montage d'une seule pièce sans connexion par enfichage, dont le module de détection (7) peut être introduit, lors du montage, à travers le logement de boîte d'essieu (3) et qui peut être fixé de manière durable et avec un contact fiable à l'unité de boîte d'essieu (1) par une partie formant bride (10) disposée sur le logement de boîte d'essieu (3) entre le module de détection (7) et la pièce de connexion (9).

2. Unité de boîte d'essieu munie de capteurs selon la revendication 1, **caractérisée en ce que** le module de détection (7) de l'unité de détection (4) peut être introduit dans dans le logement de boîte d'essieu (3) à travers un alésage radial (11) ménagé dans celui-ci et comporte un logement moulé sous pression (12) dont les plus grandes hauteur et profondeur sont légèrement inférieures au diamètre de l'alésage radial (11) ménagé dans le logement de boîte d'essieu (3).

3. Unité de boîte d'essieu munie de capteurs selon la revendication 2, **caractérisée en ce que** le module de détection (7) est vissé avec son logement moulé sous pression (12) sur la face extérieure de la bague d'étanchéité (6) de l'unité d'étanchéité (5) et **en ce qu'**il comporte au moins un capteur choisi dans le groupe comprenant des capteurs de mouvement, de sens de rotation, de température, de vibration, de position angulaire ou de vitesse de rotation.

4. Unité de boîte d'essieu munie de capteurs selon la revendication 1, **caractérisée en ce que** la partie formant bride (10) de l'unité de détection (4) est formée par un cylindre creux à travers lequel le câble de transmission de données (8) est amené à passer et sur lequel deux entretoises radiales (13, 14) mutuellement opposées sont formées de manière à présenter des alésages taraudés (15, 16) par l'intermédiaire desquels la partie formant bride (10) peut être vissée sur la face extérieure (17) du logement de boîte d'essieu (3).

5. Unité de boîte d'essieu munie de capteurs selon les revendications 2 et 4, **caractérisée en ce que** la section de cylindre creux de la partie formant bride (10), qui est tournée vers le module de détection (7), est réalisée sous la forme d'une broche de centrage (18) qui peut être introduite dans l'alésage radial (11) ménagé dans le logement de boîte d'essieu (3) et au moyen de laquelle les alésages taraudés (15, 16) ménagés dans les entretoises radiales (13, 14) de la partie formant bride (10) peuvent être fixés en position à leurs alésages filetés ménagés dans le logement de boîte d'essieu (3).

6. Unité de boîte d'essieu munie de capteurs selon la revendication 5, **caractérisée en ce que** la broche de centrage (18) présente un diamètre extérieur correspondant approximativement au diamètre de l'alésage radial (11) ménagé dans le logement de boîte d'essieu (3) et est réalisée de manière à présenter sur celle-ci au moins une gorge annulaire circonférentielle (19) dans laquelle est introduit un joint torique (20) rendant le logement de boîte d'essieu (3) étanche aux salissures et à l'humidité.

7. Unité de boîte d'essieu munie de capteurs selon la revendication 1, **caractérisée en ce que** le câble de transmission de données (8) est protégé à l'entrée et à la sortie du cylindre creux de la partie formant bride (10) contre l'usure progressive par des bagues en élastomère et contre les endommagements mécaniques par un tube de matière plastique flexible (21) disposé entre la partie formant bride (10) et la pièce de connexion (9) reliée à l'unité de traitement électronique.
